Europäisches Patentamt

European Patent Office

Office européen des brevets

(11) Publication number: **0 359 205**
**A2**

# EUROPEAN PATENT APPLICATION

(21) Application number: 89116874.2

(22) Date of filing: 12.09.89

(51) Int. Cl.5: **H04B 10/14 , H04J 1/08 , H04B 14/08**

(30) Priority: 14.09.88 US 244123

(43) Date of publication of application:
21.03.90 Bulletin 90/12

(84) Designated Contracting States:
BE DE FR GB IT

(71) Applicant: GTE LABORATORIES
INCORPORATED
1209 Orange Street
Wilmington Delaware 01901(US)

(72) Inventor: Olshansky, Robert
11 Marshall Terrace
Wayland, MA 01778(US)

(74) Representative: Patentanwälte Grünecker,
Kinkeldey, Stockmair & Partner
Maximilianstrasse 58
D-8000 München 22(DE)

(54) Optical communication system for simultaneous transmission of a baseband digital signal and multiple microwave subcarriers.

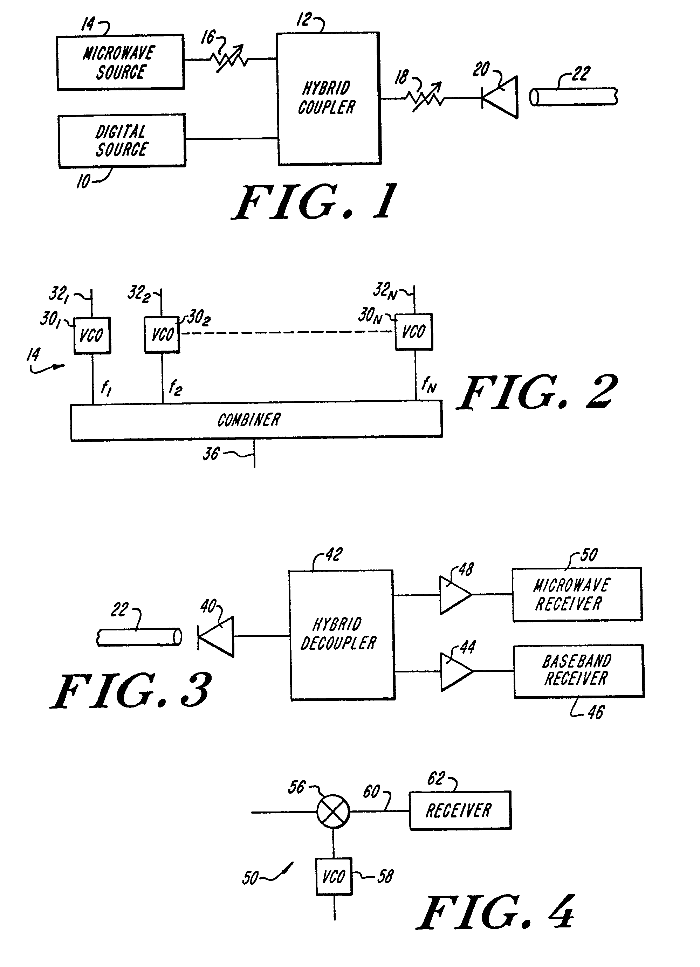

(57) An optical communication system (Figs. 1-4, 6-7) which includes an optical transmitter (Fig. 1) for transmitting an optical signal through a single-mode optical fiber (22, 88) to an optical receiver (Figs. 3, 9, 10). The optical transmitter includes an optical source for generating a light beam. The optical source is preferably a high speed laser diode (20, 86) emitting in a spectral range of 1.3 - 1.6 micrometers. The light beam is intensity modulated with a composite modulation signal comprising one or more modulated microwave subcarriers and a baseband digital signal. The microwave subcarriers are typically in the frequency range between 2 and 20 gigahertz, and the baseband digital signal is typically a time-multiplexed signal carrying multiple voice and data channels. By simultaneously transmitting a baseband digital signal and multiple microwave subcarriers on a single optical fiber, the information-carrying capacity of the optical communication system is increased.

*FIG. 1*

# OPTICAL COMMUNICATION SYSTEM FOR SIMULTANEOUS TRANSMISSION OF A BASEBAND DIGITAL SIGNAL AND MULTIPLE MICROWAVE SUBCARRIERS

This invention relates to optical communication systems and, more particularly, to hybrid optical communication systems wherein a light beam is intensity modulated by one or more microwave subcarriers and a baseband digital signal.

Optical fiber transmission systems are being extensively used in the telephone network for long distance and interoffice trunk lines because of their wide bandwidth, small size and insensitivity to electrical interference. Conventional long distance optical transmission systems utilize time division multiplexed digital transmission. The maximum data rate available in commercial lightwave systems was for many years limited to 565 megabits per second, and has only recently been increased to 1.7 gigabits per second. A 565 megabits per second optical trunk line carrying 8,000 voice channels is very cost effective for voice transmission.

Recently, efforts have been made in the telecommunications industry to utilize optical transmission systems in the local, or subscriber, loop between the central office and individual subscribers. The goal is to provide not only voice, but also data and video transmission over the optical fiber to every home and business. The video services are expected to include not only broadcast services, but also switched video services which will enable each subscriber to select programming and movies from video libraries. An uncompressed digital video signal requires a data rate of about 100 megabits per second, and analog FM video requires a bandwidth of about 30 megahertz. As result, the 565 megabit per second system, which is so effective for carrying voice channels, carries only a few video channels and must be supplemented with extensive video switching capability just to equal the channel selection presently available on cable TV. While optical fibers, laser diodes and photodiodes have more than adequate capability for bandwidths in excess of 565 megabits per second, the limiting factor is the unavailability of high speed digital electronics that are required for transmitters, for receivers and for multiplexing and demultiplexing circuits. To compete with conventional cable TV, which can provide 30 or more video channels, a subscriber distribution network based on conventional baseband digital fiber optic transmission must either operate at multigigabit per second data rates, or require extensive video switching capability.

To overcome these difficulties, microwave multiplexing of optical signals has been proposed. In these systems, a wideband microwave signal composed of many frequency multiplexed microwave carriers is used to intensity modulate a high speed laser diode. The optical signal is transmitted through a conventional single mode optical fiber to a remote location. The optical signal received at the remote location is detected with a high speed photodiode, and the transmitted signals are recovered with conventional microwave electronics. The microwave carriers can be modulated by either analog or digital signals and can be used to carry voice, data, video, digital audio, and high definition video, in almost any combination of services. Microwave modulated optical systems can be designed to transmit 4-8 gigahertz of bandwidth and can utilize the low-cost equipment presently utilized for satellite video transmission. Transmission of 60 frequency modulated video channels over 18 kilometers of optical fiber is described by R. Olshansky et al. in "60-Channel FM Video Subcarrier Multiplexed Optical Communication System." Electronics Letters, Vol. 23, No. 22, pages 1196-1198 (October 22, 1987). The transmission of ten FM video channels over 35 kilometers of optical fiber is described by W. I. Way et al. in "A 1.3-$\mu$m 35-km Fiber-Optic Microwave Multicarrier Transmission System For Satellite Earth Stations," J. Lightwave Technol., Vol. LT-5, No. 9. September 1987. pages 1325-1332. The transmission of three 44 megabit per second signals over two kilometers of optical fiber is described by T.E. Darcie et al. in "Lightwave System Using Microwave Subcarrier Multiplexing," Electronics Letters, Vol. 22, No. 15, pages 774-775 (July 17, 1986). An optical local area network utilizing microwave modulation of a light beam is disclosed in U.S. Patent No. 4,701,904 issued October 20, 1987 to Darcie.

In order to provide a wide range of subscriber services, it is desirable to optimize the information-carrying capability of the optical transmission system, while maintaining high quality video transmission and low error rate digital transmission. It is also desirable to expand the capabilities of presently-available baseband digital systems to include video transmission.

According to one aspect of the invention, there is provided apparatus for transmitting an optical signal, comprising: means for generating a light beam; means for generating at least one microwave carrier; means for modulating said at least one microwave carrier to provide a modulated microwave carrier; means for generating a digital signal; means for combining said modulated microwave carrier and said digital signal to provide a composite modulation signal; and means for intensity modulating said light beam with said composite modulation signal to provide an optical signal for transmission.

The optical transmitting apparatus typically includes means for generating a plurality of microwave carriers, means for frequency or phase modulating each of the microwave carriers to provide a plurality of modulated microwave carriers, and means for combining the plurality of modulated microwave carriers and the baseband digital signal to provide the composite modulation signal.

Preferably, the means for generating a light beam includes a high speed semiconductor laser diode, and the intensity modulating means includes means for applying the composite modulation signal to the laser diode. In a preferred embodiment, the laser diode is an InGaAsP semiconductor laser operating in the spectral range of 1.3 to 1.6 micrometers, and the microwave carriers are in the frequency range between 2 and 20 gigahertz. The baseband digital signal can be a time-multiplexed signal carrying multiple voice and data channels.

According to another aspect of the invention, there is provided apparatus for receiving an optical signal that is intensity modulated by one or more microwave carriers and a baseband digital signal. The apparatus comprises optical detector means responsive to the optical signal for detecting a composite modulation signal including the microwave carriers and the baseband digital signal, decoupling means responsive to the composite modulation signal for separating the microwave carriers and the baseband digital signal, first receiver means for demodulating at least one of the microwave carriers and second receiver means for receiving the baseband digital signal. The optical detector means preferably includes a high speed PIN photodiode.

According to yet another aspect of the invention, there is provided an optical communication system including optical transmitting apparatus and optical receiving apparatus, both as described above, and means for coupling the optical signal from the transmitting apparatus to the receiving apparatus. The optical signal is preferably coupled from the transmitting apparatus to the remotely-located receiving apparatus by a single mode optical fiber.

In accordance with another aspect of the invention, there is provided a method for generating an optical signal, comprising the steps of: generating a light beam; generating at least one modulated microwave carrier; generating a digital signal; combining said at least one modulated microwave carrier and said digital signal to provide a composite modulation signal; and intensity modulating said light beam with said composite modulation signal to provide said optical signal.

In the drawings:

FIG. 1 is a block diagram of a hybrid optical transmitter in accordance with one embodiment of the present invention;

FIG. 2 is a block diagram of the microwave source shown in FIG. 1;

FIG. 3 is a block diagram of a hybrid optical receiver in accordance with one embodiment of the present invention;

FIG. 4 is a block diagram of the microwave receiver shown in FIG. 3;

FIG. 5 is a graphic representation of the frequency response of a vapor phase regrown-buried heterostructure laser used in the optical communication system illustrated in FIGS. 1-4;

FIG. 6 is a block diagram of an experimental hybrid optical communication system in accordance with one embodiment of the present invention;

FIG. 7 is a block diagram of the 60-channel FM transmitter shown in FIG. 6;

FIG. 8 is a graphic representation of bit error rate as a function of signal-to-noise ratio for a 100 megabits per second baseband signal transmitted over 12 kilometers of single mode fiber with and without the presence of 60 FM video channels;

FIG. 9 is a block diagram of another embodiment of a hybrid optical receiver in accordance with the present invention; and

FIG. 10 is a block diagram of yet another embodiment of a hybrid optical receiver in accordance with the present invention.

In accordance with the present invention, a hybrid optical communication system provides simultaneous transmission of a baseband digital signal and multiple microwave subcarriers on a single optical link. Each of the microwave subcarriers is modulated with an analog or digital signal, which is typically a video signal, but can also be a voice, data, digital audio or other signal. The microwave subcarriers are typically in the frequency range of 2-20 gigahertz, but are not limited to such a range. The baseband digital signal is typically a high speed, time division multiplexed signal capable of carrying multiple voice and data or other digital signal channels. A block diagram of a hybrid optical transmitter is shown in FIGS. 1 and 2. A block diagram of a hybrid optical receiver is shown in FIGS. 3 and 4.

In the hybrid optical transmitter shown in FIG. 1, a baseband digital source 10 has an output coupled to one input of a hybrid coupler 12. A microwave source 14 has an output coupled through an attenuator 16 to another input of hybrid coupler 12. The output of hybrid coupler 12 is a composite modulation signal that is coupled through an attenuator 18 to a laser diode 20. Laser diode 20 generates a light beam which is intensity modulated by the modulation signal from hybrid coupler 12. The modulated light beam is an optical signal which is typically directed to one end of an optical fiber 22 for transmission to a remote location.

The digital source 10 can be any conventional source of high speed digital data. The baseband digital signal typically has a bandwidth of 100-500 megahertz, but may have a bandwidth of up to two gigahertz. The microwave source 14 is described hereinafter in connection with FIG. 2. The hybrid coupler 12 can be a 3 dB quadrature hybrid coupler or equivalent. The attenuator 16 provides control of the relative magnitudes of the microwave signal and the baseband digital signal supplied to hybrid coupler 12. An attenuator can be coupled in series with the digital source 10, if desired. The attenuator 18 provides control of the magnitude of the composite modulation signal. The modulation index of the optical signal can be controlled with attenuator 18. Typically the baseband digital signal produces an intensity modulation index of the optical signal in the range between 0.01 and 0.90, and each of the microwave carriers produces an intensity modulation index of the optical signal in the range between 0.001 and 0.50.

A block diagram of an example of the microwave source 14 is shown in FIG. 2. A plurality of voltage controlled oscillators $30_1$, $30_2$---$30_N$ produce microwave subcarrier outputs in the frequency range at frequencies $f_1$, $f_2$---$f_N$, respectively. Frequencies $f_1$, $f_2$---$f_N$ are in the frequency range between about 2 and 20 gigahertz. The spacing between adjacent frequencies is adequate to accommodate the expected signal bandwidths. The voltage controlled oscillators $30_1$, $30_2$---$30_N$ are modulated by signals on control lines $32_1$, $32_2$---$32_N$ respectively. The modulation signals, which can be digital or analog, produce frequency or phase variations in the microwave subcarrier outputs of the voltage controlled oscillators. A microwave combiner 34 combines the microwave subcarriers at the outputs of voltage controlled oscillators $30_1$, $30_2$---$30_N$ to produce a composite microwave signal on an output line 36. As described above, the baseband digital signal from digital source 10 and the multiple microwave subcarriers from microwave source 14 are combined by hybrid coupler 12 to produce a composite modulation signal for the laser diode 20.

A block diagram of a hybrid optical receiver in accordance with one embodiment of the present invention is shown in FIG. 3. The hybrid optical receiver is capable of receiving the optical signal generated by the transmitter of FIG. 1 and recovering the information signals. The transmitter of FIG. 1 and the receiver of FIG. 3, coupled together by optical fiber 22, comprise an optical communication system.

The intensity modulated optical signal transmitted through optical fiber 22 is directed to a PIN photodiode 40. The output of photodiode 40 is coupled to the input of a hybrid decoupler 42 which separates the baseband digital signal and the composite microwave signal. The baseband digital signal is connected from one output of hybrid decoupler 42 to the input of an amplifier 44, typically having a bandwidth of 0 to 500 megahertz. The output of amplifier 44 is supplied to the input of a baseband receiver 46. The composite microwave signal is connected from another output of hybrid decoupler 42 to the input of a microwave amplifier 48, typically having a bandwidth of 2 to 8 gigahertz. The output of amplifier 48 is coupled to the input of a microwave receiver 50. In a preferred embodiment, the decoupler 42 is a 3 dB quadrature hybrid decoupler or equivalent. The amplifier 48 can be a 2-6 gigahertz low noise amplifier, the amplifier 44 can be a two-stage DC-500 megahertz low noise amplifier, and the baseband receiver 46 can be a 100 megabits per second digital receiver.

A block diagram of an example of the microwave receiver 50 is shown in FIG. 4. The output from amplifier 48 is coupled to one input of a mixer 56. A voltage controlled local oscillator 58 is coupled to the other input of mixer 56. The mixer 56 and the local oscillator 58 convert a selected one of the microwave subcarrier frequencies to a convenient intermediate frequency at an output 60 of mixer 56. The mixer output 60 is coupled to the input of a receiver 62 for demodulation of the intermediate frequency to provide the selected information signal.

The system shown in FIGS. 1-4 illustrates a single hybrid optical transmitter and a single hybrid optical receiver for ease of understanding. It will be understood that a typical subscriber loop may have many users coupled to an optical fiber. The optical fiber may include branches as necessary. Furthermore, each user is likely to have both a transmitter and a receiver.

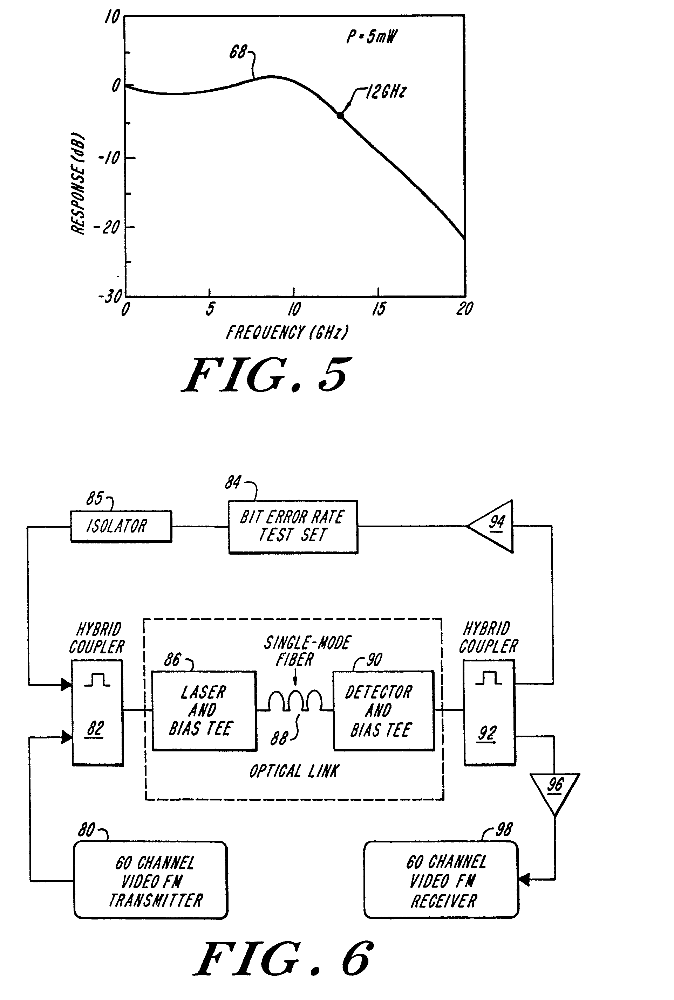

It is apparent that the laser diode 20 is a critical component of the hybrid optical transmitter. In a preferred embodiment, the optical transmitter is a high frequency vapor phase regrown-buried heterostructure InGaAsP laser emitting in the 1.3-1.6 micrometer spectral range. The laser has a very simple mesa geometry which reduces the parasitic capacitance due to PN junctions and results in extremely good, high speed performance. A sample of 25 devices with 200 micrometer cavity lengths had an average small signal modulation bandwidth of 11 gigahertz at a d.c. bias of 5 milliwatts. The frequency response of a typical device biased at 5 milliwatts is shown in FIG. 5 as curve 68. The fastest devices have small signal modulation bandwidths in excess of 20 gigahertz. Further information regarding the construction and characteristics of these diodes is provided in R. B. Lauer, "Optoelectronic Componentry for the Direct Transmission of Microwave Signals Over Optical Fiber," SPIE, Vol. 756, Optical Technologies for Space Communication Systems, 1987, pages 136-141. and R. Olshansky et al., "Frequency Response of 1.3 Micrometer InGaAsP High Speed Semiconductor Lasers," IEEE Journal of Quantum Electronics, Vol. QE-23, No. 9, September, 1987, pages 1410-1418.

The photodiode 40 is preferably an InGaAs PIN structure wherein the mesa diameter is about 30 micrometers to reduce diode capacitance and the depletion width is about 1 micrometer to reduce transit time delays. These photodiode structures produce bandwidths in excess of 15 gigahertz. Further information regarding construction of such photodiodes is provided in the aforementioned Lauer article.

In the above-described configuration, intensity modulation of the light beam is accomplished by modulation of the laser diode that generates the light beam. In another approach, a light beam is generated by any suitable means (such as a laser diode), and the light beam is coupled to an optical modulator such as a lithium niobate crystal. In this approach, light generation and modulation are performed separately.

The microwave source 14 shown in FIG. 2 and the microwave receiver shown in FIG. 4 can utilize commercially available microwave equipment. The voltage controlled oscillators $30_1$, $30_2$---$30_N$ can, for example, be fast-tuned, narrow-band oscillators, and the combiner 34 can be a conventional 1 X N power combiner. In the microwave receiver 50 shown in FIG. 4, the mixer 56 is typically a double-balanced mixer, and the microwave receiver 62 is typically a delay line discriminator or other type of demodulator.

A block diagram of an exemplary system for the simultaneous transmission of 60 FM video channels in the 2.7 to 5.2 gigahertz band and a 100 megabits per second baseband digital signal is shown in FIG. 6. A 60-channel video FM transmitter 80 was coupled to one input of a 3 dB hybrid coupler 82. The 100 megabits per second digital signal was generated by a bit error rate test set 84 and was coupled through an isolator 85 to the other input of hybrid coupler 82. The test set 84 was a Tautron bit error rate test set, and the hybrid coupler 82 was a 3 dB quadrature hybrid. The output of hybrid coupler 82 intensity modulated a 1.3 micrometer high speed InGaAsP buried heterostructure laser 86 biased at 5 milliwatts. The signal from hybrid coupler 82 modulates a light beam generated by laser 86 to provide an optical signal. The optical signal was coupled through 12 kilometers of conventional single mode optical fiber 88 and was detected by a high speed InGaAs photodiode 90 with a responsivity of 0.7 A/W and a 15 gigahertz bandwidth. The fiber-coupled power was 700 microwatts, and the receiver signal was 70 microwatts. The 10 dB link budget includes 5 dB transmission loss and 5 dB margin. Following a bias tee at the photodiode 90, a hybrid decoupler 92 separated the low frequency and high frequency components of the signal. The baseband digital signal was coupled through an amplifier 94 to the input of the test set 84. The amplifier 94 included two d.c.-500 MHz, 50 ohm amplifiers with a total gain of 68 dB and with noise figures of 1.5 dB. The 60-channel microwave signal was coupled through a 2-8 gigahertz amplifier 96 with a 3 dB noise figure to a 60-channel FM receiver 98. The receiver 98 was constructed generally as shown in FIG. 4 and described hereinabove.

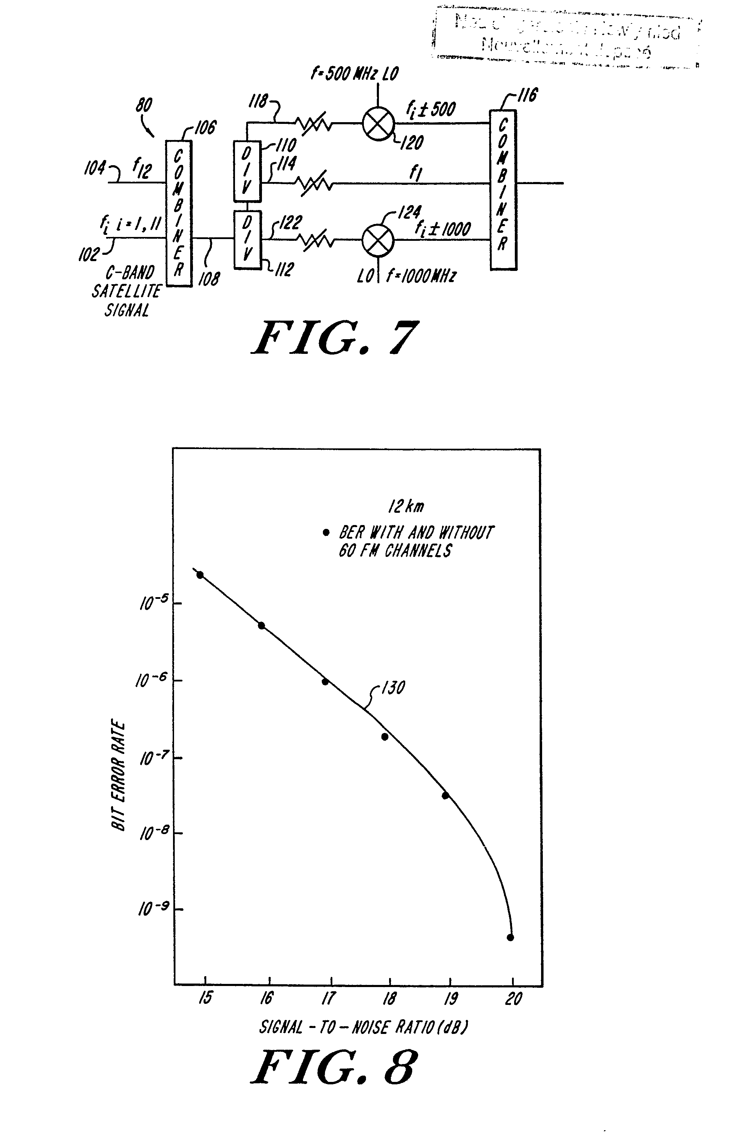

A block diagram of the 60-channel subcarrier multiplexed FM transmitter 80 is shown in FIG. 7. The 60-channel source was obtained by taking a signal 102 from a C-band satellite (3.7-4.2 gigahertz) carrying eleven channels and adding a locally-generated signal 104 for a total of twelve channels. The signals 102 and 104 were combined by a combiner 106, and the 12-channel microwave signal 108 from combiner 106 was power-divided into three branches by dividers 110 and 112. A first branch 114 was coupled to a first input of a combiner 116, a second branch 118 was shifted by ±500 MHz by a mixer 120, and a third branch 122 was shifted by ±1,000 MHz by mixer 124. The outputs of mixers 120 and 124 were coupled to second and third inputs of combiner 116, respectively. The microwave output signal from combiner 116 includes 60 channels in the 2.7-5.2 gigahertz frequency range.

For both the baseband digital signal and the subcarrier multiplexed microwave signal, the carrier-to-noise ratio, CNR, is given as

$$CNR = \eta \, (I_{rms}{}^2 R)/(NFkTB) \qquad (1)$$

where $I_{rms}$ is the rms photocurrent in a given channel, R is the 50 ohm load resistance, 9 represents the loss introduced by components positioned between the photodiode 90 and the respective amplifier, NF is the amplifier noise figure, kT is the thermal energy and B is the receiver bandwidth. The hybrid coupler 92 introduces a 3 dB loss in the high frequency channel and a 0.5 dB loss in the baseband channel. In the baseband channel, there is an additional 4 dB loss from the isolator. The filter bandwidth was 30 megahertz for the FM video channels and was 65 megahertz for the 100 megabits per second baseband digital channel. A 16.5 dB CNR is required to produce a 56 dB weighted signal-to-noise ratio for a video channel.

A measurement of the bit error rate (BER) as a function of signal-to-noise ratio (SNR) for the 100 megabits per second channel is shown in FIG. 8 as curve 130. The same data points were measured both with and without the presence of the 60 FM video channels. In either case, an SNR of 20 dB and a baseband modulation index of approximately 7% yield a $10^{-9}$ bit error rate. The required SNR was somewhat greater than the theoretical value of 15.6 dB because of the intersymbol interference generated by reflections between the photodiode 90 and the baseband amplifier 94. The use of a wideband PIN-FET receiver would eliminate reflections as well as excess insertion loss. For the 60 FM video channels, a 56 dB weighted SNR is achieved with a modulation index of 3% per channel. These results show that a baseband digital signal and a high frequency subcarrier multiplexed signal can simultaneously be transmitted without interference between signals. This capability greatly enhances the flexibility and transmission capability of broadband networks.

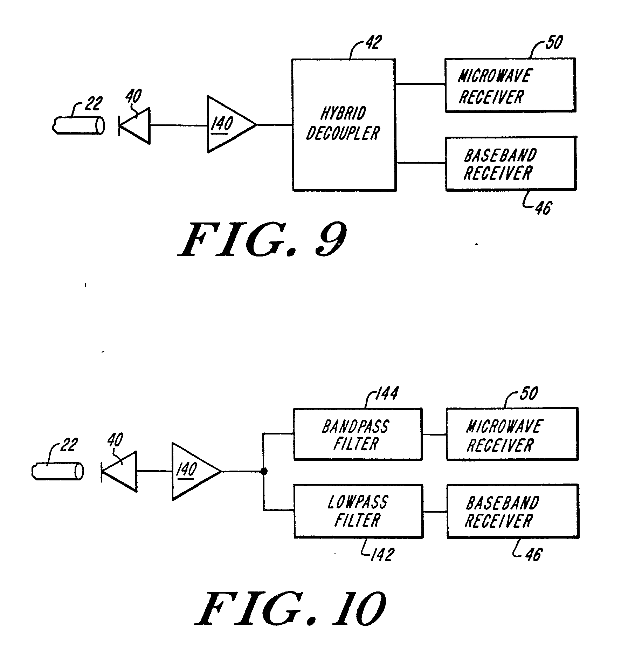

A block diagram of another embodiment of a hybrid optical receiver is shown in FIG. 9. Elements corresponding to the elements in FIG. 3 have the same reference numerals. The output of photodiode 40 is coupled to the input of a low-noise, wideband amplifier 140. The amplifier 140 may, for example, have a bandwidth from 15 KHz to 5 GHz. The output of amplifier 140 is coupled to the input of hybrid decoupler 42. The outputs of hybrid decoupler 42 are coupled to the inputs of microwave receiver 50 and baseband receiver 46, respectively. In this embodiment, amplifier 140 amplifies both the baseband digital signal and the microwave subcarriers.

A block diagram of yet another embodiment of a hybrid optical receiver is shown in FIG. 10. Elements corresponding to the elements in FIGS. 3 and 9 have the same reference numerals. The output of photodiode 40 is coupled to the input of low-noise, wideband amplifier 140. The output of amplifier 140 is coupled to the input of a lowpass filter 142 and to the input of a bandpass filter 144. The output of lowpass filter 142 is coupled to the input of baseband receiver 46, and the output of bandpass filter 144 is coupled to the input of microwave receiver 50. The lowpass filter 142 has a bandwidth sufficient to pass the baseband digital signal. The bandpass filter 144 passes the composite Microwave signal. In the embodiment of FIG. 10, the filters 142 and 144 perform the equivalent function of the hybrid decoupler in separating the baseband digital signal and the microwave subcarriers.

It will be understood that the hybrid optical communication technique shown and described herein is not limited to the examples and system configurations disclosed herein. The optical communication technique of the invention can be utilized for transmission of any baseband digital signal and any subcarrier multiplexed microwave signals. The baseband digital signal can have any desired bandwidth, and the microwave signal can include any number of subcarriers and any type of modulation signals and bandwidths. The subcarrier modulation can be either digital or analog.

Furthermore, while the optical signal is most advantageously carried on an optical fiber, it can also be transmitted through space or through any suitable optical transmission medium.

While there has been shown and described what is at present considered the preferred embodiments of the present invention, it will be obvious to those skilled in the art that various changes and modifications may be made therein without departing from the scope of the invention as defined by the appended claims.

## Claims

1. Apparatus for transmitting an optical signal, comprising:
means for generating a light beam;
means for generating at least one microwave carrier;
means for modulating said at least one microwave carrier to provide a modulated microwave carrier;
means for generating a digital signal;
means for combining said modulated microwave carrier and said digital signal to provide a composite modulation signal; and
means for intensity modulating said light beam with said composite modulation signal to provide an optical signal for transmission.

2. Optical transmitting apparatus as defined in claim 1 wherein said means for generating a light beam comprises a high speed semiconductor laser diode that emits in the spectral range of 1.3 to 1.6 micrometers.

3. Optical transmitting apparatus as defined in claim 2 wherein said means for generating at least one microwave carrier comprises means for generating a plurality of microwave carriers, wherein said modulating means comprises means for frequency or phase modulating each of said microwave carriers to provide a plurality of modulated microwave carriers, and wherein said means for combining comprises means for combining said plurality of modulated microwave carriers and said digital signal to provide said composite modulation signal.

4. Optical transmitting apparatus as defined in claim 3 wherein said microwave carriers are in the frequency range between 2 and 20 gigahertz.

5. Optical transmitting apparatus as defined in claim 4 wherein said digital signal has a bandwidth of up to about 2 gigahertz.

6. Optical transmitting apparatus as defined in claim 3 wherein said digital signal produces an intensity modulation index of said optical signal in the range between 0.01 and 0.90.

7. Optical transmitting apparatus as defined in claim 6 wherein each of the microwave carriers produces an intensity modulation index of said optical signal in the range between 0.001 and 0.50.

8. Optical transmitting apparatus as defined in claim 4 wherein said intensity modulating means comprises means for applying said composite modulation signal to said laser diode.

9. Optical transmitting apparatus as defined in claim 1 wherein said means for combining comprises a hybrid coupler.

10. Optical communication apparatus comprising:

transmitter means including means for generating a light beam and means for intensity modulating the light beam with a composite modulation signal to provide an optical signal, said composite modulation signal comprising at least one modulated microwave carrier and a digital signal;

receiver means remotely located from said transmitter means, including a detector responsive to said optical signal for providing said composite modulation signal and means for separating said digital signal and said at least one modulated microwave carrier from said composite modulation signal; and

means for coupling said optical signal from said transmitter means to said receiver means.

11. Optical communication apparatus as defined in claim 10 wherein said coupling means comprises a single mode optical fiber.

12. Optical communication apparatus as defined in claim 11 wherein said means for generating a light beam comprises a high speed semiconductor laser diode that emits in the spectral range of 1.3 to 1.6 micrometers.

13. Optical communication apparatus as defined in claim 11 wherein said transmitter means further includes means for generating a plurality of modulated microwave carriers, means for generating said digital signal and means for combining said modulated microwave carriers and said digital signal to provide said composite modulation signal.

14. Apparatus for transmitting an optical signal, comprising:

means for generating a light beam; and

means for intensity modulating the light beam with a composite modulation signal to provide an optical signal for transmission, said composite modulation signal comprising at least one modulated microwave carrier and a digital signal.

15. A method for generating an optical signal, comprising the steps of:

generating a light beam;

generating at least one modulated microwave carrier;

generating a digital signal;

combining said at least one modulated microwave carrier and said digital signal to provide a composite modulation signal; and

intensity modulating said light beam with said composite modulation signal to provide said optical signal.

16. Apparatus for receiving an optical signal intensity modulated by a plurality of microwave subcarriers and a digital signal, comprising:

optical detector means responsive to said optical signal for detecting a composite modulation signal including said plurality of microwave subcarriers and said digital signal;

decoupling means responsive to said composite modulation signal for separating said plurality of microwave subcarriers and said digital signal;

first receiver means for demodulating at least one of said microwave subcarriers; and

second receiver means for receiving said digital signal.

17. Optical receiving apparatus as defined in claim 16 wherein said optical detector means comprises a high speed PIN photodiode.

18. Optical receiving apparatus as defined in claim 17 wherein said decoupling means comprises a hybrid decoupler.

19. A method for optical communication comprising the steps of:

generating a light beam;

generating a plurality of modulated microwave carriers;

generating a digital signal;

combining said modulated microwave carriers and said digital signal to provide a composite modulation signal;

intensity modulating said light beam with said composite modulation signal to provide an optical signal;

transmitting said optical signal to a remote location;

at the remote location, detecting said optical signal to recover said composite modulation signal; and

separating said digital signal and said plurality of modulated microwave carriers from said composite modulation signal.

*FIG. 1*

*FIG. 2*

*FIG. 3*

*FIG. 4*

P=5mW

68

12GHz

FIG. 5

FIG. 6

**FIG. 7**

**FIG. 8**

**FIG. 9**

**FIG. 10**